# EUROPEAN PATENT APPLICATION

(11) **EP 1 544 754 A2**
(43) Date of publication of application: **22.06.2005**
(21) Application number: 04028346.7
(22) Date of filing: 30.11.2004
(51) Int. Cl.: G06F 17/30

(54) **System and method for file and storage management**

(30) Priority: 01.12.2003 JP 2003400977
(71) Applicant: SONY CORPORATION, Tokyo (JP)
(72) Inventor: Nishio, Tsuyoshi, Shinagawa-ku, Tokyo (JP)
(74) Representative: Körber, Martin, Dipl.-Phys.

(57) **Abstract**

A storage system constructed by combining a plurality of types of storage media differing in physical properties is managed as a single virtual storage. Consequently, a single file is divided into actual data and the identification information for accessing the actual data and then the identification information for access is associated with a file system for management purposes. Further, files are managed in a layered manner, in accordance with use frequency categories to manage the move of files between the categories. When the actual data in a file is to be moved to a storage medium in a lower level category, the actual data is backed up on another storage medium in a still lower level category.

## Description

### BACKGROUND OF THE INVENTION

The present invention relates to a file management apparatus for managing a storage system, a storage management system that uses the file management apparatus, a storage management method for managing the storage management system, a program for implementing the technologies for managing the storage management system, and a recording medium that stores the program.

Now that networks are highly advanced, a plurality of computers frequently share data. A computer providing data sharing is called a file server.

For file server operation, it is necessary to consider a failure or other contingency that may occur in a storage device. In general, data is rendered redundant (backed up) to prepare for a storage device failure or other contingency.

Data is backed up while the file server is not used. In general, data is backed up in the night. The nighttime period is sufficient for data backup as far as the amount of data to be backed up is small. In recent years, however, the amount of data is increasing at an accelerating pace. In accordance with such a data increase, the disk density and capacity are remarkably increasing.

Meanwhile, the data transfer rate has not increased so much as compared to an increase in the disk density or capacity. That is why the time required for backup has greatly increased. As a result, it is anticipated that a backup operation may not terminate while a regular operation is suspended.

To solve the above problem, it is necessary to use a higher-speed disk unit or tape unit. For example, the use of a RAID (Redundant Array of Independent Disks) is required.

However, the complete switch to a RAID device entails considerable cost. Recently, it has also been pointed out that there is a technical limit on the parallel use of storage devices.

In addition, an increase in the amount of management data has also become a problem. The reason is that information is computerized in recent years. Owing to computerization, a large amount of data is now stored in the file server.

The data stored in the file server can be roughly divided into two types: the "data to be used" and the "data to be not used".

The currently encountered problems have arisen mainly because the "data to be used" and the "data to be not used" are stored together in a quickly accessible, large-capacity disk unit. This accounts for an increase in the backup time and in the cost.

### Reference Cited

Patent Document 1: Japanese Patent Laid-open No. 2000-148547

A management method for moving data in accordance with the file conditions is now proposed to solve the above problems. The proposed method moves part of data to a high performance-to-cost, secondary disk. This move is performed by storage system management software.

The files to be moved are designated by a system administrator. For example, an infrequently used folder is designated. The management software moves files in the designated folder to a secondary storage with certain timing.

However, the above management method poses another problem. From the viewpoint of a higher-level human or software, the local data is moved to another location without permission. It is therefore necessary, for instance, to inform the user of moved information, perform a manual procedure, and change the software settings.

Under the above circumstances, a scheme for causing file systems owned uniquely by various devices to look like a single pseudo file system is proposed. The proposed scheme is a management method that causes various devices to mutually mount their unique file systems.

The use of the above scheme makes it possible to display files existing in various devices within a single tree. However, the file locations are still allowed to change. As described above, the current file systems remain problematic.

In addition, it is anticipated that another problem may arise. More specifically, it is foreseen that an increasing amount of data will need to be stored. For the storage of such data, it is demanded that the recording media density be increased. It is also forecast that the importance of data itself increases.

The higher the density of a recording medium, the more difficult it is to maintain hardware reliability. The same data is stored in a plurality of devices in consideration of a possible hardware failure. It is anticipated that the use of such a redundancy scheme will be increasingly important.

### SUMMARY OF THE INVENTION

The present invention has been made to solve one of the above-mentioned technical problems.

To achieve the above object, one aspect of the present invention provides an integrated management system that exercises movement management over hierarchically classified categories, file redundancy management over various categories, and position management over a file system.

### (1) Storage system

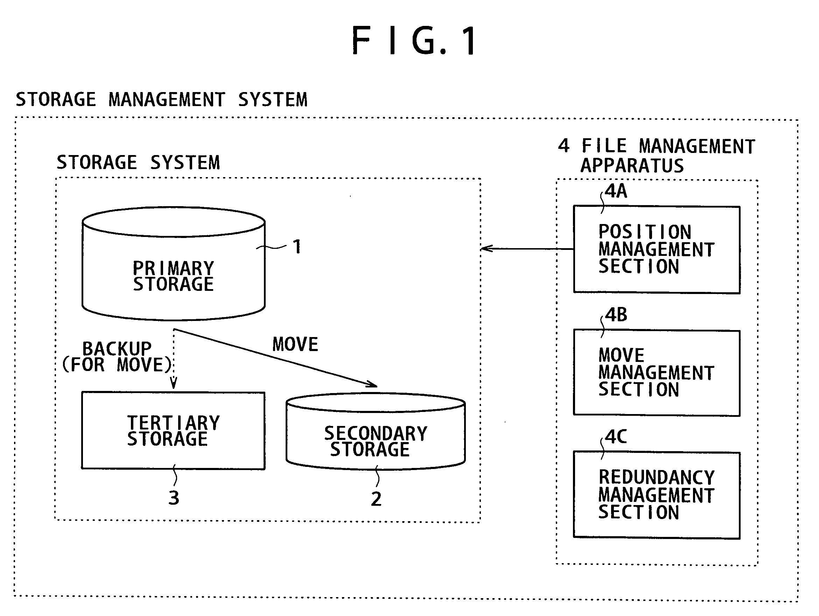

FIG. 1 shows a concrete example. The present invention assumes that a storage system is constructed by combining a plurality of types of storage media differing in physical properties. FIG. 1 illustrates a typical complex system that is constructed by combining three types of storages (primary, secondary, and tertiary).

The three types of storages fall under various layered categories that are defined according to the frequency of file use. In order from the highest use frequency category to the lowest, the storages shown in FIG. 1 are a primary storage 1, a secondary storage 2, and a tertiary storage 3.

Files in the "most frequently used" category correspond to the primary storage 1. Files in the "second most frequently used" category correspond to the secondary storage 2. Files in the "third most frequently used" category correspond to the tertiary storage 3.

A hard disk, magnetic tape, or other magnetic storage medium, an optical storage medium for optical data recording, or a semiconductor memory is used as a storage medium. The storage medium to be used may be in any external form. For example, the storage medium may be in disk form, tape form, card form, or other form that is appropriate for the employed recording method.

All the employed storage media need not be of the same type. Further, all the employed storage media do not have to exhibit the same reliability or access performance (random access performance included). In general, storages in a "frequently used" category are required to exhibit rapid accessibility. On the other hand, storages in an "infrequently used" category are required to have a large capacity.

The storages constituting the storage system may be mounted in any manner. For example, the storages may be mounted within the same housing or in separate housings.

The storages constituting the storage system may be placed in any location. For example, the storages may be positioned in the same location or space or in different locations or spaces.

The storages may be interconnected in any manner. They may be hard wired or wirelessly connected. They may be interconnected via a network or via an exclusive line. The same also holds true for the inter-storage communication procedure.

Optimum types of the above-mentioned elements should be selected in accordance with the operating environment in which the storage system is established.

### (2) File management apparatus

A file management apparatus 4 manages the above-mentioned storage system as a single virtual storage. The file management apparatus 4 includes a position management section 4A, which corresponds to the aforementioned management function, a move management section 4B, and a redundancy management section 4C.

The position management section 4A divides a single file into actual data and identification information for accessing the actual data, and associates the identification information for access with a file system for management purposes.

For example, the ID or other identification information unique to a specific file is used as the information for accessing. This information is unique within the storage system.

More specifically, a file system is managed with the identification information for file access instead of a physical position on a storage medium. Therefore, no change is applied to file system management even when the physical file recording position is changed due to a move between layered categories.

The relationship between the identification information for file access and the physical position on a storage medium is separately managed, for instance, by a database.

The term "actual data" refers to a data body that is obtained when the identification information for file access and other management information are removed from a file. Only the actual data is to be recorded onto a storage medium. This assures the effective use of a recording area.

For communication with a remote location, the management data, which is small in amount, and the actual data, which is large in amount, may use separate transmission paths.

For example, it is possible to transmit the management data to a remote location via a wide area network and transmit the actual data to a remote location via Fibre Channel. In general, wide area networks may not always provide security. However, security is meaningless as regards the use of the management data alone. As a result, the management data can be transmitted via a wide area network.

The transmission capacity of a wide area network is limited. Therefore, when the actual data is transmitted via a wide area network, it takes a long time. From the viewpoint of effective transmission path use, a single transmission path should not be used to preoccupy a band for an extended period of time. However, it does not mean that the transmission of the actual data via a wide area network is prohibited.

If, on the other hand, both the actual data and the management data are transmitted via Fibre Channel, only the management data consumes a band. Therefore, such data transmission should be avoided from the viewpoint of effective transmission path use. However, it does not mean that the transmission of the management data via Fibre Channel is prohibited.

Fibre Channel is a transmission medium or network that permits high-speed (e.g., 133 Mbps to 4 Gbps), long-distance (e.g., 10 km) transmission, for instance, between high-speed computers or between a computer and a storage device. However, it does not mean that Fibre Channel cannot be used for short-distance transmission.

If a high degree of security is demanded, the actual data to be transmitted should be encrypted with a file-specific ID. In such an instance, the actual data can be decrypted only by the file management apparatus 4, which manages file-specific IDs. As a result, information confidentiality can be maintained even when the encrypted actual data leaks.

The move management section 4B manages files in a layered manner, in accordance with use frequency categories, and manages the move of files (actual data in physical sense) between categories. The move management section 4B individually monitors the use frequencies of files in various categories, and moves any file failing to comply with predefined conditions between different categories.

In other words, the move management section 4B moves files between storages that physically differ from each other. When a file is moved to a lower level category, the actual data is deleted from a storage in a category that is the move source.

When a file is moved, the relationship between the identification information for accessing the file and the physical positions of storage media is updated. It is preferred that a storage at the move destination perform directory management of the identification information for file access. Performing directory management increases the speed of file (actual data) access.

The move management section 4B also manages the move of files from a low level category to a high level category. For example, the move management section 4B performs file move management when a file exists on a storage medium in a category other than the highest level category.

In the above instance, it is preferred that the move management section 4B copy a file stored on a storage medium that stores the actual data of a file and is in the highest level category to a storage medium in the highest level category within the storage system.

If, for instance, a file (actual data) physically exists in the secondary storage 2 and tertiary storage 3, the secondary storage 2 is in a higher level category than the tertiary storage 3. In this case, the file (actual data) is copied to the primary storage 1, which is in the highest level category.

As a result, the file (actual data) simultaneously exists on storage media that are in three different layered categories. The identification information for file access is used to read the file (actual data). In general, a "frequently used" layered category takes precedence when a file read operation is performed.

When the actual data of a file is to be moved to a storage medium in a low level category, the redundancy management section 4C backs up the actual data onto another storage medium in a still lower level category.

In other words, the redundancy management section 4C redundantly stores actual data in a plurality of storages at all times. This function eliminates the necessity for storing all the necessary data in highly reliable, expensive storages. As a result, the system can be configured at a low cost.

It is preferred that the redundancy management section 4C use a tape storage medium for actual data backup. The reason is that tape storage media assures high reliability at a favorable cost when used for storing a large amount of data.

The tape storage media includes an optical recording type in addition to a magnetic recording type. When a large amount of data is contained in a file, the tape storage media can read the data at a higher speed than a magnetic disk.

It is also preferred that the redundancy management section 4C periodically back up the actual data in the most frequently used file onto a tape storage medium. This ensures that the files in all categories can be rendered redundant.

Further, only the files (actual data) in the highest level category need to be transferred for periodic backup purposes. Thus, the time required for backup decreases.

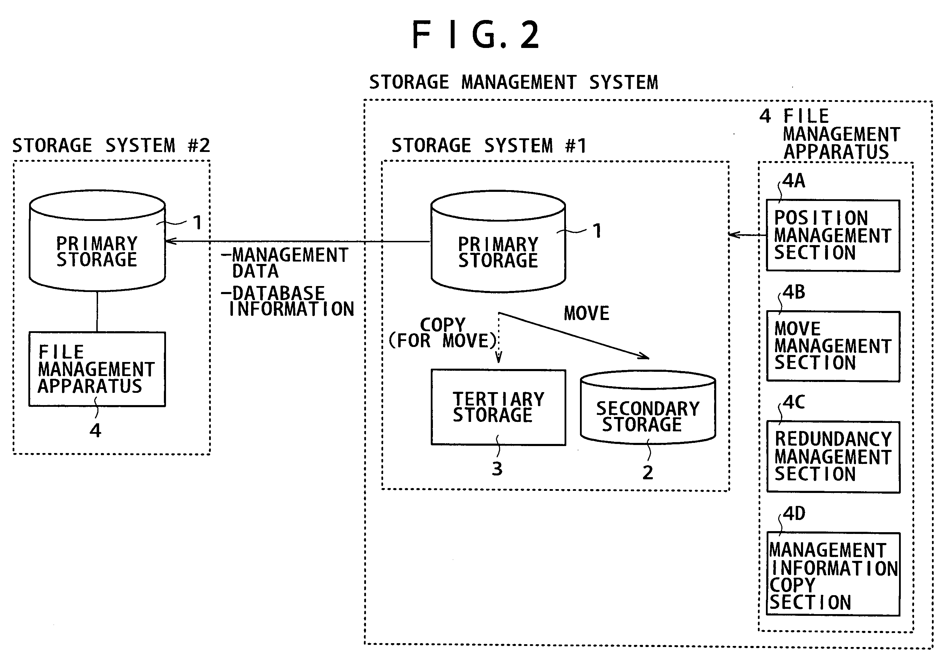

The file management apparatus 4 can also be used for storage system management as shown in FIG. 2. In the example shown in FIG. 2, a second storage system is provided in addition to the storage system shown in FIG. 1. The second storage system includes a storage 1, which is equivalent to the primary storage, and a file management apparatus 4 for the storage 1. In this instance, the file management apparatus 4 includes a management information copy section 4D.

The management information copy section 4D copies the management data for the actual data and the database information for actual data recording position management to storage system #2, which is equivalent to the primary storage 1. In this instance, the actual data is not to be copied. Therefore, the primary storage does not have to have a large capacity.

Even if the primary storage 1 of storage system #1, which is the first storage system and active, becomes faulty in the above instance, redundant management data can be used to continuously perform the current operation The reason is that the primary storage of storage system #2, which is the second storage system, can operate at the same high speed as the primary storage of storage system #1, which is the first storage system.

It is preferred that whenever the database information is updated, the updated portion be copied. This ensures that the database information can be constantly made up-to-date with a minimum amount of communication.

For example, the file management apparatus 4 shown in FIGS. 1 and 2 can be implemented as a function of a main server that incorporates the primary storage 1. It can also be implemented as a controller that merely incorporates the function of the move management section 4A.

The above function can be implemented as either hardware or software. The software includes application software, operating system, and firmware.

According to one aspect of the present invention, it is possible to provide a low-cost storage management system that can handle an increase in the currently used data amount without incurring an increase in the backup time.

The above and other objects, features and advantages of the present invention will become apparent from the following description and the appended claims, taken in conjunction with the accompanying drawings in which like parts or elements denoted by like reference symbols.

### BRIEF DESCRIPTION OF THE DRAWINGS

FIG. 1 shows an example of a storage system configuration according to the present invention.
FIG. 2 shows another example of a storage system configuration according to the present invention.
FIG. 3 is a table illustrating a concrete example of a part of a management policy according to one embodiment of the present invention.
FIG. 4 illustrates one embodiment of a storage system according to the present invention.
FIG. 5 is a table illustrating area definitions.
FIG. 6 illustrates the relationship between the storage system and individual areas.
FIG. 7 illustrates an automatic move operation that is performed by a control software to switch from one device category to another.
FIG. 8 illustrates how the control software coordinates with the application of an external computer to switch from one device category to another.
FIG. 9 illustrates how the most frequently used storage device recovers from a failure.
FIG. 10 illustrates how the second most frequently used storage device recovers from a failure.
FIG. 11 is a table illustrating a backup process that is performed to store operation data at a remote location.

### DESCRIPTION OF THE PREFERRED EMBODIMENT

The application of the present invention to an NAS (Network Attached Storage) system will now be described. As regards a technology that is not described or depicted in this specification, the relevant known technology generally accepted in the art is applied.

### (1) Management policies

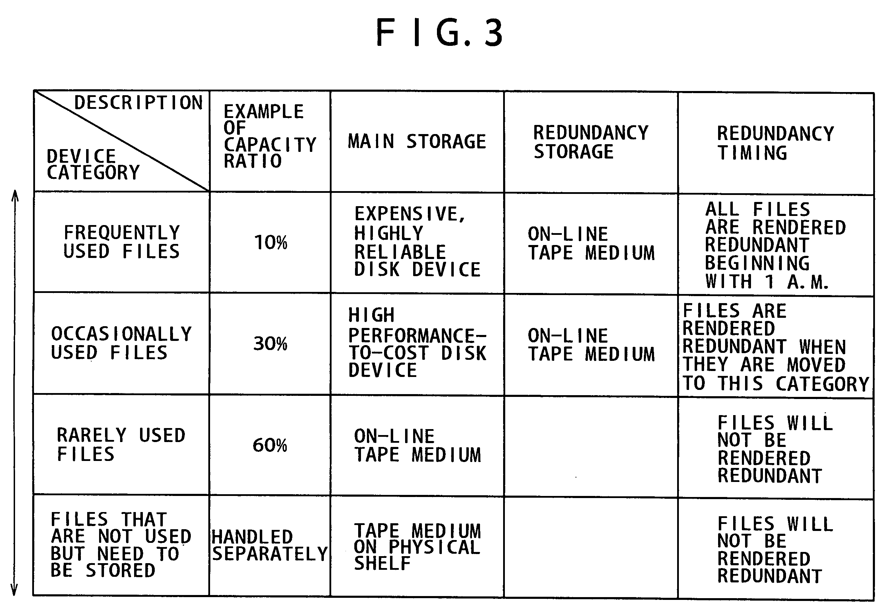

FIG. 3 shows a management policy according to a preferred embodiment of the present invention. The example shown in FIG. 3 represents a case where three management policies (management policies (a) through (c)) which will be described later, are substantiated.
(a) A storage is divided into four device categories. Each file moves between the categories depending on the use.
(b) The device to be used for redundancy and the timing for providing redundancy are appropriately selected.
(c) No matter what device category a file (actual data) moves to, its position within a file system remains unchanged.

### (1-1) Policy (a)

A plurality of storages constituting a storage system are classified into four device categories. The device categories correspond to layered categories that are classified according to the use frequency.

In order from the highest use frequency to the lowest, the four hierarchical categories are "frequently used files", "occasionally used files", "rarely used files", and "files that are not used but need to be stored".

The use frequency category is determined according to the overall frequency of storage system use. In other words, the use frequency category is not determined on an individual device category basis. As a file system, the elapsed time from the last access is used as the basis for move between categories.

More specifically, the use frequency category is determined according to the comparison with a threshold value setting for each category. When a file is accessed, the elapsed time resets and the logical layered category switches to the highest level category.

In a file system in which a long period of time has elapsed since the beginning of an operation, the proportion of data in a low level category increases. The example presented in FIG. 3 assumes that the total capacity of the three highest categories permitting on-line file access (actual data access) is 100%.

In the example shown in FIG. 3, the "frequently used files" data, which corresponds to the highest level category, accounts for 10% of the total.

The "occasionally used files" data, which corresponds to the medium level category, accounts for 30% of the total. The "rarely used files" data, which corresponds to the lowest level category, accounts for 60% of the total.

Various main storages are associated with the device categories as described below. An expensive, high-reliability disk storage device is associated with the "frequently used files" category, which represents the highest use frequency. For example, a RAID hard disk is associated with the "frequently used files" category.

A high performance-to-cost disk storage device is associated with the "occasionally used files" category. For example, an IDE hard disk is associated with the "occasionally used files" category. In the example shown in FIG. 3, 75% of the whole data amount for the two highest level categories (30% out of 40%) is associated with an inexpensive disk storage device.

Thus, the cost is substantially lower than when the same amount of data is stored by the highest level disk storage device. The speed of file access is the same as for a disk storage device in the "frequently used files" category. Therefore, the difference between the disk storage devices is not recognized from the outside.

A tape storage medium is associated with the "rarely used files" category. The tape storage medium is electrically accessible via a transmission path. In other words, the tape storage medium is on-line.

The tape storage medium is highly reliable. Its unit cost per data is remarkably lower than that of a disk storage device. Further, the tape storage medium is suitable for storing a large amount of data. Therefore, the tape storage medium is ideally suited for the storage of rarely used files, which constitute a majority of files that need to be managed on-line.

A tape storage medium is associated with "files that are not used but need to be stored" category. However, this tape storage medium is managed so as to deny direct electrical access to it. In other words, it is managed in the off-line state. The tape storage medium is physically stored, for instance, on a shelf or in a box.

### (1-2) Policy (b)

For file backup (redundancy) of the two highest level categories, a tape device that differs from the main storage in physical properties is selected. The reasons are described below.

One reason is that the tape device is a static medium and does not become damaged. On the other hand, a disk storage device may be physically damaged by an earthquake or other external force and rendered incapable of reading data.

Another reason is that if a disk storage device is used, hard disks of the same lot may simultaneously become damaged. On the other hand, there is a limited possibility that a plurality of tape storage media may simultaneously become damaged.

When a tape storage medium is used, it is easy to increase its capacity later. The tape storage medium is used for the storage of a backup partly because it can be managed off-line.

The two highest level categories are rendered redundant because the present embodiment associates the two highest level categories with a disk storage device. The highest level category is backed up every night after termination of a daily operation. The backup begins, for instance, at 1 o'clock in the morning. Such a backup protects the most frequently used files, which cause a great economical loss if they are lost.

The second highest level category is backed up when a file is moved from the highest level category. In this manner, file accessibility and storage safety are assured for the two highest level categories.

### (1-3) Policy (c)

Files are divided into bit data, which is a data body, and its management data for management purposes. The management data includes an identifier (ID) for accessing the bit data, a file name, and other items of management information. The management data is linked to a file system that exists on the highest level storage medium.

A file or actual data in a storage is accessed in a manner described below. First of all, a file in the highest level category is accessed via a file system in the highest level storage. The backup file for such a file is accessed by using a full pathname that is linked to the file system. The full pathname is managed by a database.

The "occasionally used files" and other low level categories are accessed by using a unique identifier linked to the file system. This ensures that the logical position within the file system remains unaffected even when the actual bit data storage location moves to a lower level category.

The backup files for such categories are accessed by using physical position information stored on a tape storage medium that is linked to unique identification information. The link information is managed by a database.

### (2) Overall system

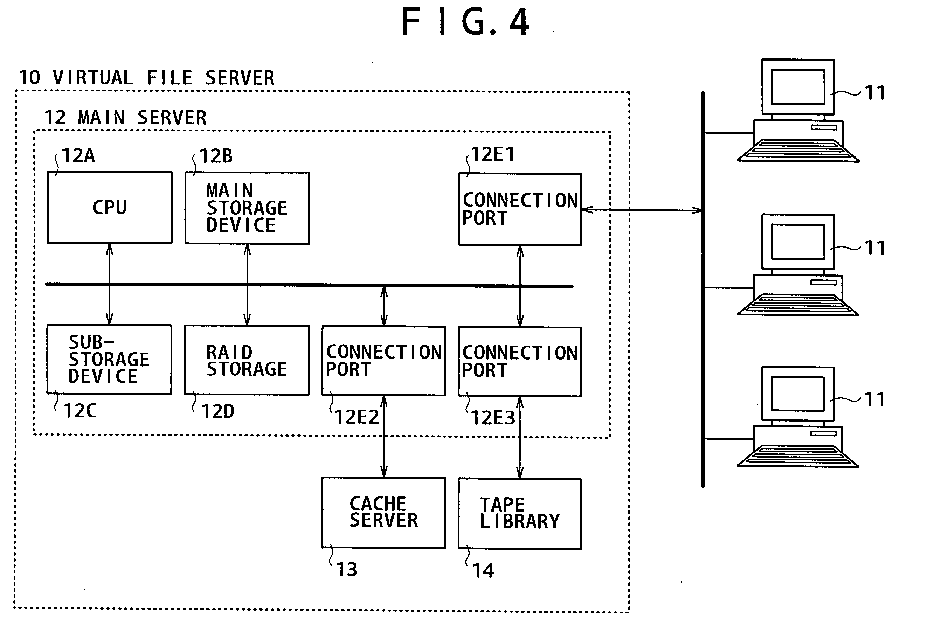

FIG. 4 shows a typical overall configuration of an NAS system. The system includes a virtual file server 10, which functions as a single virtual storage medium, and a terminal device 11, which is connected to the virtual file server 10 via a network.

The terminal device 11 may be either a client terminal or a server terminal. The terminal device 11 may use any operation system. For example, a LAN (Local Area Network) is used as the network. Ethernet (registered trademark), FDDI (Fiber Distributed Data Interface), or the like is used as a LAN interface.

NFS (Network File System), CIFS (Common Internet File System), or the like is used as a network protocol.

The virtual file server 10 includes a main server 12, a cache server 13, and a tape library 14. Physically, the main server 12 is connected to the network. Therefore, the communication between the terminal device 11 and virtual file server 10 is established via the main server 12.

The main server 12 corresponds to the primary storage 1 shown in FIG. 1. The main server 12 shown in FIG. 4 has a management function for managing the entire virtual file server and a storage function for storing currently used data. Logically, the storage device owned by the main server 12 falls under the highest level category.

The main server 12 includes a central processing unit (CPU) 12A, a main storage device 12B, a sub-storage device 12C, a RAID storage 12D, and connection ports 12E1-12E3.

Connection port 12E1 is used for connecting to the network. Connection port 12E2 is used for connecting to the cache server 13. Connection port 12E3 is used for connecting to the tape library 14.

The CPU 12A controls a computer and fetches and executes instructions. The main storage device 12B temporarily stores data and a program in which processing steps are written. For example, a RAM (Random Access Memory) or ROM (Read Only Memory) is used as the main storage device.

The main storage device 12B stores, for instance, a basic input/output system, firmware, and control software.

The sub-storage device 12C stores a program and processing data. A hard disk drive, CD-ROM drive, or other storage media drive is used as the sub-storage device 12C. For example, a control program for implementing a virtual file server function is recorded in the sub-storage device 12C.

Parallel-connected RAID level 0+1 hard disk arrays are used as the RAID storage 12D. In other words, the employed RAID storage 12D provides mirroring of a disk unit that implements striping (RAID 0).

Owing to the configuration described above, the RAID storage 12D retains high reliability and random access capability. The RAID storage 12D functions as the primary storage, which stores the actual data of "frequently used files".

A file system and a database linking unique identifiers to various files are recorded in the RAID storage 12D. The RAID storage 12D also records the physical recording position of the actual data of each file.

The cache server 13 corresponds to the secondary storage 2 shown in FIG. 1. The cache server 13 shown in FIG. 4 falls under the second highest device category. In other words, the cache server 13 is used for recording "occasionally used files".

Parallel-connected RAID level 5 hard disk arrays are used as the cache server 13. In other words, the employed cache server 13 is such that parity data are distributed to hard disks.

Owing to the configuration described above, the cache server 13 retains high reliability and random access capability. Inexpensive, large-capacity IDE hard disks are employed to form the cache server 13.

The unit price per capacity of the IDE hard disks is lower than that of the hard disks constituting the RAID storage 12D. Therefore, the cost is lower than when the same capacity is provided by the RAID storage 12D alone.

The actual data in a file whose use frequency is lowered is moved from the RAID storage 12D to the cache server 13. When the actual data is moved, it is deleted from the RAID storage 12D. When the actual data is moved, it is also superposed within the tape library 14 for recording purposes.

The cache server 13 also functions as a cache for the tape library 14. Therefore, the actual data existing in both the cache server 13 and tape library 14 is read from the cache server 13.

The cache server 13 is connected to the main server 12, for instance, via Ethernet (registered trademark).

The tape library 14 corresponds to the tertiary storage 3 shown in FIG. 1. The tape library 14 shown in FIG. 4 falls under the third highest device category. In other words, the tape library 14 is used for recording "rarely used files".

The tape library 14 functions as a backup storage for the RAID storage 12D and cache server 13.

For example, a set of a plurality of cartridge type magnetic tapes is used as the tape library 14. The storage data capacity can be increased by increasing the number of cartridges. Alternatively, a tape recording device that accepts a single tape cartridge may be used.

A cartridge storing data that will apparently remain unused can be stored off-line.

The actual data stored in the cache server 13 is moved to the tape library 14 when it exceeds a predetermined threshold value representing the time interval between data uses. It should be noted that the move is logical. The reason is that a file is already copied when it is moved from the RAID storage 12 to the cache server 13.

Therefore, when the file is moved, its actual data is merely deleted from the cache server 13.

Files are periodically backed up into the tape library 14 from the RAID storage 12D. The files to be moved for periodic backup account for approximately 10% of the entire storage capacity that can be accessed on-line. Therefore, the time required for backup is remarkably reduced.

It is preferred that not only the actual data within the "data to be used" but also the management data and database information be copied when a backup is made in the tape library 14. In such an instance, the tape library 14 is connected to the main server 12, for instance, via SCSI (Small Computer System Interface).

If, for instance, the employed tape storage medium can be written onto only once, the information reliability is high. This type of tape storage medium is called a WORM (Write Once Read Many).

The above type of tape storage medium is particularly used for an application where high reliability is essential. However, it goes without saying that a rewritable tape storage medium may be used.

### (3) File management operation

The file management operation performed within the virtual file server will now be described. This operation is executed by control software that manages the virtual file server.

### (3-1) Area definition

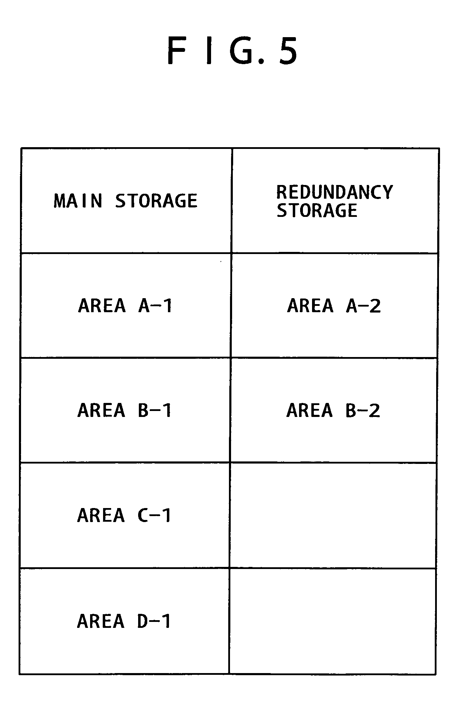

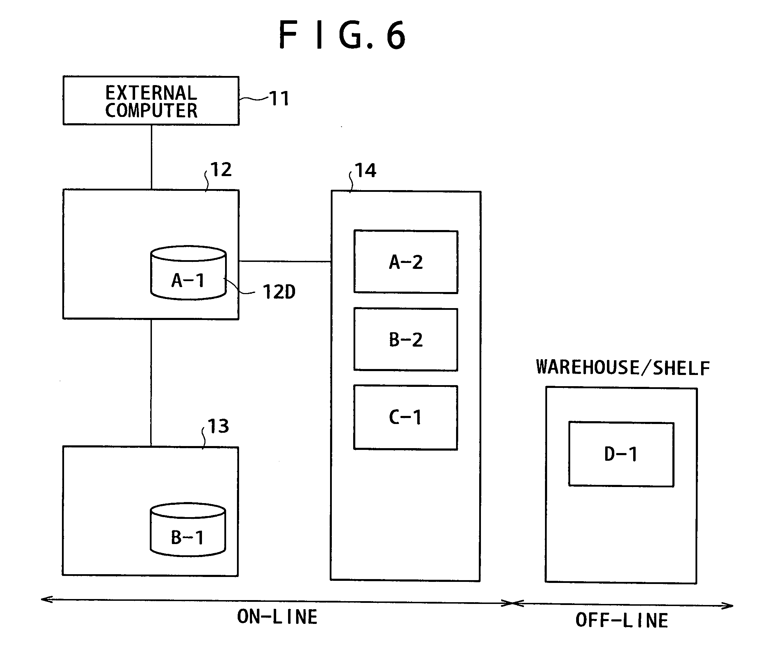

The notation used in the subsequent explanation will now be described. FIG. 5 shows the relationship between four areas (A through D) and storages. FIG. 6 shows the relationship between areas A through D and storages.

The above four areas correspond to the device categories described earlier. More specifically, area A-1 corresponds to a main storage in the "most frequently used" device category. Area A-1 is allocated in a recording area of the RAID storage 12D of the main server 12.

Area A-2 corresponds to a storage that is used for redundancy of area A-1. Area A-2 is allocated as an area of the tape library 14. For example, area A-2 is allocated in one dedicated magnetic cartridge or a plurality of magnetic cartridges.

Area B-1 corresponds to a main storage in the "second most frequently used" device category. Area B-1 is allocated in a recording area of the cache server 13. Area B-2 is a storage that is used for redundancy of area B-1. Area B-2 can also be allocated as an area of the tape library 14. For example, area B-2 is allocated in one dedicated magnetic cartridge or a plurality of magnetic cartridges.

Area C-1 corresponds to a main storage in the "most infrequently used " device category that can be managed on-line. Area C-1 is allocated as an area of the tape library 14. For example, area C-1 is allocated in one dedicated magnetic cartridge or a plurality of magnetic cartridges.

Area D-1 corresponds to a main storage in a device category that can be managed off-line. Area D-1 corresponds to a magnetic cartridge that is physically stored on a shelf or in a warehouse.

### (3-2) Move between categories and redundancy process

Moves between the areas can be divided into two types: a move toward a lower level (A -> B -> C -> D) and a move toward a higher level (D -> C -> B -> A). The move toward a lower level begins when an external computer stores a file in area A. On the other hand, the move toward a higher level begins when access is gained by the external computer.

### (a) Automatic move by control software

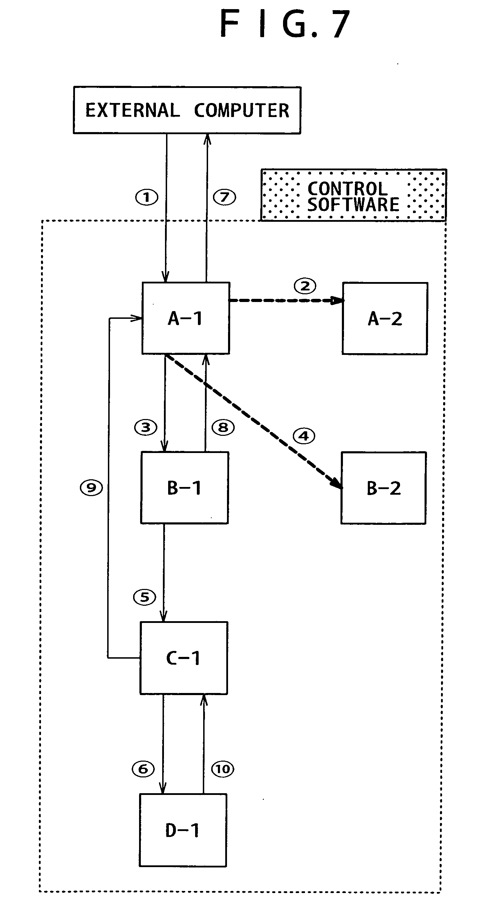

FIG. 7 illustrates an automatic file move that is invoked by control software installed on the main server 12.

The move toward a lower level (A -> B -> C -> D) is controlled according to the time during which no access is gained by the external computer. The longer the period of time during a file is not accessed by the external computer, the lower the level to which the file moves.

The move toward a higher level (D -> C -> B -> A) occurs when access is gained by the external computer. The target file (actual data) is first moved to area A from some other areas. The external computer then reads the file from area A.

The moves toward a higher level and lower level are as described above. Individual processes will now be described. In the figure, solid lines indicate a move, whereas a broken line indicates redundancy (copy operation).
(1) The external computer stores a file in area A-1
(2) The control software periodically copies (backs up) area A-1 to area A-2. Such a backup is made at a user-designated time. The time for making a backup can be changed through the main server 12 even after the start of an operation.
(3) The control software checks whether the remaining capacity of area A-1 is smaller than a threshold value. This check is performed periodically or whenever area A-1 is accessed. The threshold value is an initially set value or a value specified via a user interface.
   The above-mentioned access may also be for a write or read. The amount of actual data stored in the main server 12 increases with time. Eventually, the amount of stored actual data approaches an upper limit of the storage capacity of the RAID storage 12D, which is provided for the main server 12.
   When the remaining capacity of area A-1 is smaller than the threshold value, the control software moves the actual data that is equal in amount to the excessive portion to area B-2 until a predefined remaining amount is obtained. For example, a file infrequently accessed by the external computer is moved prior to a frequently accessed file. If, for instance, a file is placed in area A-1, it is moved immediately.
(4) The control software moves the actual data to area B-1 and at the same time copies the actual data to area B-2. In other words, the actual data exists in both the cache server 13 and tape library 14 to provide redundancy.
(5) The control software checks whether the remaining capacity of area B-1 is smaller than a threshold value. This check is performed periodically or whenever area B-1 is accessed. When the remaining capacity of area B-1 is smaller than the threshold value, the control software sequentially erases files beginning with the most infrequently accessed one.
   When the above erasure process is performed, area B-2 logically changes to area C-1. As described above, area C-1 is not positively created. However, area B-2, which is a backup area, is changed to area C-1 by a process of elimination.
(6) The use status of a file (actual data) corresponding to area C-1 is judged by the user. If the user concludes that the file is not to be used, the control software ejects the tape storage medium containing the file (actual data) from the tape library 14.
   The ejected tape storage medium is moved, for instance, to an external shelf. When a tape storage medium is ejected in this manner from the tape library 14, files stored on the tape storage medium are moved to area D-1. This move is physically performed.
(7) A case where the external computer accesses a file in the virtual file server 10 will now be described. If the accessed file exists in the main server 12, the control software transmits the accessed file from area A-1.
(8) If, on the other hand, the accessed file exists in the cache server 13, the control software moves the file (actual data) from area B-1 to area A-1. Subsequently, the file is transferred from area A-1 to the external computer.
(9) If the accessed file exists in the tape library 14, the control software moves the file (actual data) from area C-1 to area A-1. Subsequently, the file is transferred from area A-1 to the external computer.
(10) If the accessed file is managed off-line, the control software displays on-screen instructions, prompting the user to load a tape storage medium stored on the external shelf into the tape library 14.

When the user loads the target tape storage medium into the tape library 14 from the external shelf, the tape storage medium, which has been managed as area D-1, changes to area C-1. Subsequently, the file (actual data) is moved to area A-1 as described earlier.

### (b) Mixed use of automatic move function of control software and move function of external computer

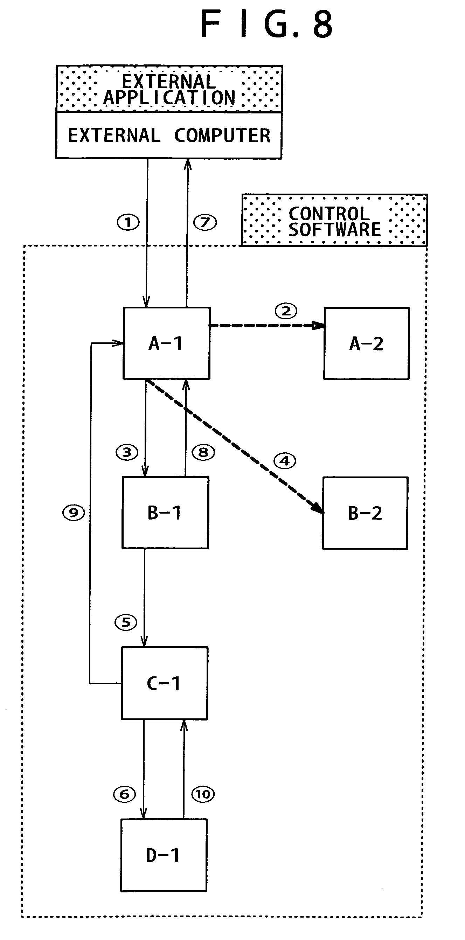

The file move function exercised by the control software installed on the main server 12 and an application installed on the external computer will now be described with reference to FIG. 8.

In the present embodiment, an application program running on the external computer controls an API (application interface) that moves a file (actual data) among the areas.

If access is gained by the external computer, the file (actual data) is first moved to area A-1 no matter what device category the file (actual data) falls under.

When a file move management function is exercised by the external computer, the following use is possible. If, for instance, it is expected that a file (actual data) will be read at a predetermined date and time, the necessary file can be moved to area A in advance.

Further, when, for instance, an application upgrade is performed, files (actual data) of an earlier version, which will be rarely used, can be moved to a lower level area.

Individual processes will now be described. In the figure, solid lines indicate a move, whereas a broken line indicates redundancy (copy operation).
(1) The external computer stores a file in area A-1
(2) The control software periodically copies (backs up) area A-1 to area A-2 at a date and time designated by an external application. Such a backup is made at a user-designated time. The time for making a backup can be changed from the external computer even after the start of an operation.
(3) The external application uses the API to move a specific file (actual data) in area A-1 to area B-1.
(4) The control software moves the actual data to area B-1 and at the same time copies the same actual data to area B-2. In other words, the actual data exists in both the cache server 13 and tape library 14 to provide redundancy.
(5) The control software checks whether the remaining capacity of area B-1 is smaller than a threshold value. This check is performed periodically or whenever area B-1 is accessed. When the remaining capacity of area B-1 is smaller than the threshold value, the control software sequentially erases files beginning with the most infrequently accessed one. When this file erasure operation is performed, area B-2 logically changes to area C-1.
(6) The use status of a file (actual data) in area C-1 is judged by the user. If the user concludes that the file is not to be used, the control software ejects the tape storage medium containing the file (actual data) from the tape library 14.
   The ejected tape storage medium is moved, for instance, to an external shelf. When a tape storage medium is ejected in this manner from the tape library 14, files stored on the tape storage medium are moved to area D-1. This move is physically performed.
(7) If the external computer accesses a file in the virtual file server 10, the description of an automatic move by the control software applies.

More specifically, the accessed file (actual data) is copied to the main server 12 and transmitted to the external computer no matter what device category the file falls under.

### (4) Storage area recovery

This section describes a case where either or both of areas A-1 and B-1, which are provided by disk storage media, are damaged. Redundancy is provided to recover the data in the above areas.

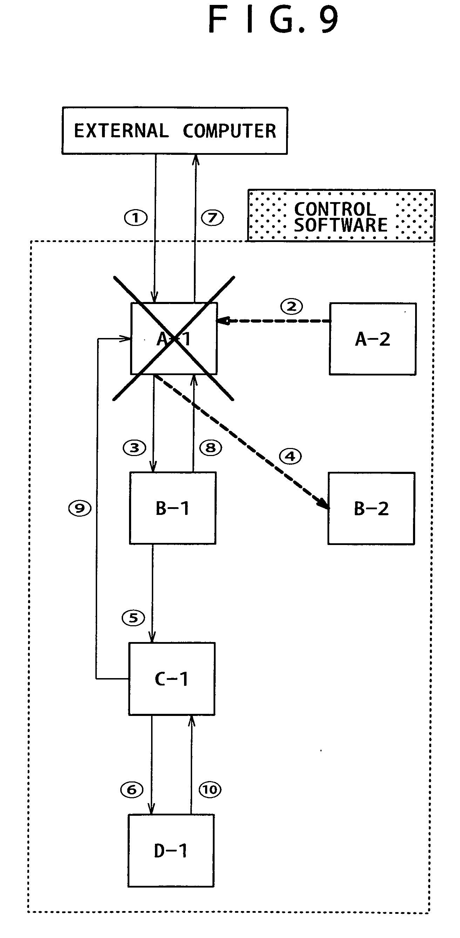

FIG. 9 illustrates a case where area A-1 is damaged In this case, a file (actual data) accessed by the external computer cannot be read from the main server 12 (RAID storage 12D).

The control software reads a full pathname of backup data stored in a database and then accesses the tape library 14. The backup data is then read from a specified tape storage medium.

The read from a tape storage medium generally takes a long time. However, the read can be performed without interrupting the system operation.

In the above instance, the control software prompts the user to replace the RAID storage 12D for area A-1. When the control software detects that the RAID storage 12D is replaced, it copies the actual data in area A-2 to area A-1. The state prevailing before a failure is then restored.

The control software may alternatively halt the system operation until the RAID storage 12D is replaced with a new one. Another alternative is to let the control software regard a normally operating cache server 13 (area B-1) as area A-1.

In the above instance, however, there is a problem with the reliability of the cache server 13. Therefore, a backup is made in the tape library 14 at the same time the cache server 13 is written into.

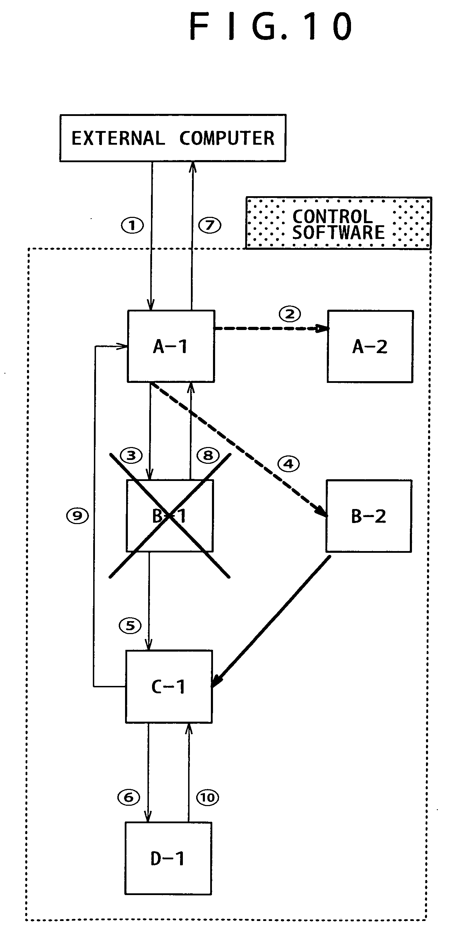

FIG. 10 shows a case where area B-1 is damaged. This event is equal, though the data lost amount is not equal, to a case where a file in area B-1 moves to area C-1. Therefore, if area B-1 is damaged, area B-2 logically changes to area C-1.

As described above, a mere logical area change allows the virtual file server operation to continue without being interrupted.

### (5) Operation performed for storage at a remote location

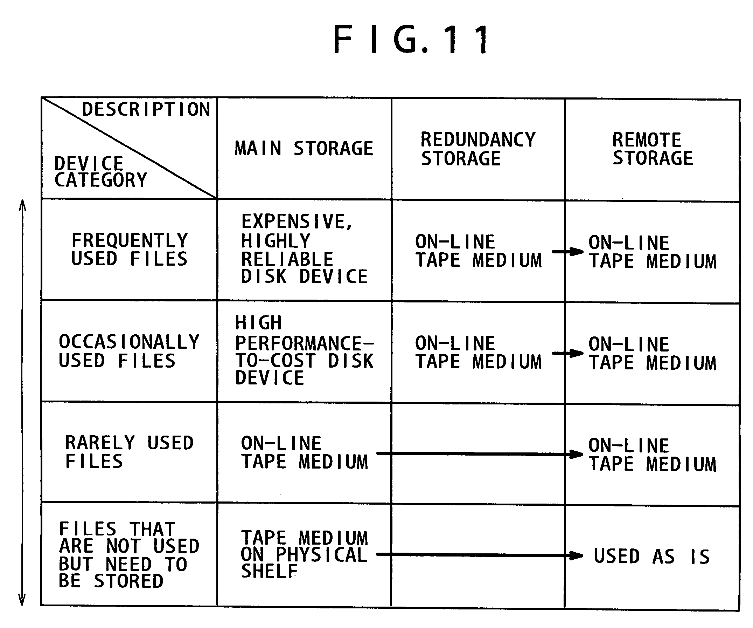

FIG. 11 shows typical cases where data is moved for storage at a remote location, including a location within a building, which is separate from a place of operation, to prepare for a disaster or failure.

When data existing at a certain time within the storage system needs to be stored in a remote, fire-resistant, earthquake-resistant warehouse or the like, the storage at a redundancy destination is copied in the background because "frequently used files" and "occasionally used files" are already backed up to provide redundancy.

The above copy can be made without imposing any load on the main storage of the active system because the target files are rarely accessed. During the copy process, the control software temporarily refrains from accessing the redundancy destination.

In other words, the path to the redundancy destination is temporarily blocked. After such a path is blocked, the actual data is copied from one tape storage medium to another.

As regards "rarely used files", a tape storage medium, which is a main storage, is directly copied. Since the contained files are rarely used, the degree of necessity for considering the access from the external computer is low. Therefore, the files are copied in the background during an operation.

As regards "files that are not used but need to be stored", a tape storage medium stored in an external warehouse or on a shelf should be physically transported.

### (6) Advantages of the present embodiment

In general, a file system exists on a disk storage. After the file system is established, it is therefore difficult to expand a storage area during an operation. In the present invention, area A-1 contains the file system.

Therefore, the present embodiment links the identifiers of files (actual data) recorded in areas B-1, C-1, and D-1 with the file system in area A-1 for management purposes. This ensures that areas B-1, C-1, and D-1 can be flexibly expanded or resized.

Further, the present embodiment divides a storage medium into a plurality of categories in accordance with the frequency of use and renders each category redundant. This ensures that files (actual data) in a physically fragile or frequently used portion of a storage area can be backed up onto an optimum medium with optimum timing to provide redundancy.

It is likely that frequently used areas become damaged. If the data in a frequently used area is rendered redundant each time a file is updated, the resulting performance may not be adequate. Therefore, a periodic backup option is selected for a "frequently used area".

Meanwhile, an "occasionally used area" does not pose any problem even if it is rendered redundant at the time of an inter-category move. As described above, the present embodiment makes a selection to provide optimum timing in accordance with the frequency of use.

The present embodiment also divides a storage into areas depending on the frequency of use and assigns storage devices having optimum physical properties to the areas in accordance with the frequencies of use. This ensures that the cost and performance can be optimized.

In the present embodiment, an API is released to an application program so as to reflect the application's definition of each file.

For example, even if a plurality of sets of data seem equal to the control software, they can be divided into necessary data and unnecessary data from the viewpoint of an application. Therefore, when the API is released, the importance to the application can be reflected in the move among categories.

When the data for storage at a remote location is to be created, the present embodiment can use an active, infrequently accessed area. It is therefore possible to create such data in the background without interrupting the system operation.

The storage management system according to the present invention can be applied to manage digital resources for various uses. For example, the storage management system according to the present invention can be used to store digital image data. It can be applied to all the image business related fields (including in-home systems).

Further, the storage management system according to the present invention can be used to store financial data More specifically, it can be used to store form data, slip data, and financial transaction data.

The storage management system according to the present invention can also be used to store data that is transmitted/received via a network. More specifically, it can be used to store electronic mail messages, Web pages, and communication logs.

Further, the storage management system according to the present invention can be used to store publishing related data. More specifically, it can be used to store reproduction copy data, map data, and other digital contents.

The storage management system according to the present invention can also be used to store medical data. More specifically, it can be used to store X-ray images, MRI (Magnetic Resonance Imaging) images, medical chart data, reservation data, and other medical data.

Further, the storage management system according to the present invention can be used to store the documents of various institutions and organizations. More specifically, it can be used to store the public documents of an administrative organ, judicial organ, or lawmaking organ. It can also be used to store in-house corporate documents or personal documents.

Furthermore, the storage management system according to the present invention can be used to store technical drawing data. More specifically, it can be used to store CAD (Computer Aided Design) data, CAM (Computer Aided Manufacturing) data, and CAE (Computer Aided Engineering) data.

While a preferred embodiment of the present invention has been described using specific terms, such description is for illustrative purposes only, and it is to be understood that changes and variations may be made without departing from the spirit or scope of the following claims.

## Claims

1. A file management apparatus for managing a storage system, which is constructed by combining a plurality of types of storage media differing in physical properties, as a single virtual storage, the file management apparatus comprising:
a position management section for dividing a single file into actual data and identification information for accessing the actual data and associating the identification information for access with a file system for management purposes;
a move management section for managing files in a layered manner, in accordance with use frequency categories and managing the move of files between the categories; and
a redundancy management section, which, when actual data in a file is to be moved to a storage medium in a lower level category, simultaneously backs up the actual data on another storage medium in a still lower level category.

2. The file management apparatus according to claim 1, wherein said redundancy management section backs up actual data on a tape storage medium.

3. The file management apparatus according to claim 1, wherein said redundancy management section periodically backs up actual data in the most frequently used file onto a tape storage medium.

4. The file management apparatus according to claim 1, wherein said redundancy management section backs up actual data in a managed file onto a storage medium at a remote location via Fibre Channel and backs up the identification information for accessing the file system and a specific file onto a storage medium at said remote location via a wide area network.

5. The file management apparatus according to claim 1, wherein said redundancy management section, when actual data is to be moved to a storage medium in a lower level category in compliance with instructions issued by an external application, backs up the actual data onto another storage medium in a still lower level category simultaneously with the actual data move.

6. The file management apparatus according to claim 1, wherein said move management section, when a file on a storage medium in a category other than the highest level category is to be accessed, copies the file stored on a storage medium that stores actual data of the file and is in the highest level category to a storage medium in the highest level category within a storage system.

7. A storage management system comprising:
a storage system that is constructed by combining a plurality of types of storage media differing in physical properties; and
a file management apparatus for managing the plurality of types of storage media as a single virtual storage,
said file management apparatus including:
a position management section for dividing a single file into actual data and identification information for accessing the actual data and associating the identification information for access with a file system for management purposes;
a move management section for managing files in a layered manner, in accordance with use frequency categories and managing the move of files between the categories; and
a redundancy management section, which, when actual data in a file is to be moved to a storage medium in a lower level category, simultaneously backs up the actual data on another storage medium in a still lower level category.

8. A storage management method for use in a storage management system comprising a storage system that is constructed by combining a plurality of types of storage media differing in physical properties, and a file management apparatus for managing the plurality of types of storage media as a single virtual storage, the storage management method comprising the steps of:
dividing a single file into actual data and identification information for accessing the actual data and associating the identification information for access with a file system for management purposes;
managing files in a layered manner, in accordance with use frequency categories and managing the move of files between the categories; and
backing up, when actual data in a file is to be moved to a storage medium in a lower level category, the actual data on another storage medium in a still lower level category.

9. A recording medium storing a program that causes a computer to perform functions for managing a storage system, which is constructed by combining a plurality of types of storage media differing in physical properties, as a single virtual storage, the program including:
a position management function for dividing a single file into actual data and identification information for accessing the actual data and associating the identification information for access with a file system for management purposes;
a move management function for managing files in a layered manner, in accordance with use frequency categories and managing the move of files between the categories; and
a redundancy management function, which, when actual data in a file is to be moved to a storage medium in a lower level category, simultaneously backs up the actual data on another storage medium in a still lower level category.
